# EUROPEAN PATENT SPECIFICATION

(11) **EP 2 448 053 B1**
(45) Date of publication and mention of the grant of the patent: **01.04.2015**
(21) Application number: 11168992.3
(22) Date of filing: 07.06.2011
(51) Int. Cl.: H01M 10/04

(54) **Secondary Battery**
Sekundärbatterie
Batterie secondaire

(30) Priority: 01.11.2010 US 408984 P; 24.05.2011 US 201113115037
(43) Date of publication of application: 02.05.2012
(73) Proprietor: Samsung SDI Co., Ltd., Yongin-si, Gyeonggi-do (KR)
(72) Inventor: Lee, Myungro, Gyeonggi-do (KR)
(74) Representative: Walaski, Jan Filip

(56) References cited:
- EP-A1- 1 717 895
- US-A1- 2003 148 175
- US-A1- 2003 215 700
- US-A1- 2009 061 304

## Description

The present invention relates to a secondary battery.

Secondary batteries include an electrode assembly formed by sequentially stacking a positive electrode plate, a negative electrode plate and a separator and winding the same in one direction, a can housing the cylindrical electrode assembly, and a cap plate sealing an open portion of the prismatic can to thereby form a bare cell. The secondary battery generally includes an electrode terminal insulated from the cap plate and serving one of electrodes in the secondary battery. The cap plate and the can may serve the other electrode in the secondary battery.

In the secondary battery, the electrode assembly is wound and then housed into a can in a planar state. When the electrode assembly swells during repeated charge/discharge operations, both of the planar side surfaces of the electrode assembly also swell.

Accordingly, the swelling of the electrode assembly may result in swelling of the can, specifically both side surfaces which have relatively large areas.

In order to achieve the above and other aspects of the present invention, one embodiment of the present invention provides a secondary battery including a plurality of cylindrical electrode assemblies, which is capable of preventing a prismatic can from swelling.

According to an aspect of the invention, there is provided a secondary battery comprising a can, a plurality of electrode assemblies in the can and a centre pin in each of the electrode assemblies. Each centre pin is attached to a bottom portion of the can.

A bottom portion of each centre pin may comprise a flange for connecting the centre pin to the bottom portion of the can. The bottom portion of the can may comprise a plurality of projections for receiving respective ones of the centre pins.

Each centre pin may comprise a hollow cylinder.

The length of each centre pin is between about 90% to about 110% of the length of one of the electrode assemblies.

The secondary battery may further comprise a cap plate coupled to the can, wherein each of the electrode assemblies comprises first and second electrode tabs, wherein the first electrode tabs are connected to an underside of the cap plate or to an inside of the can, and the second electrode tabs are connected to a terminal plate to form a battery terminal.

The first electrode tabs may be stacked together and connected to an underside of the cap plate, and the second electrode tabs are stacked together and connected to the terminal plate.

Each of the electrode assemblies may be cylindrical.

The plurality of electrode assemblies may be arranged in a single row. The plurality of electrode assemblies may be arranged in multiple rows, wherein each electrode assembly comprises a positive electrode tab and a negative electrode tab.

In each row of electrode assemblies, electrode tabs having the same polarity may be aligned with one another and connected together by a single first elongate connection plate.

The electrode assemblies in adjacent rows may be arranged so that the closest electrode tabs in two adjacent rows have the same polarity, and the electrode tabs having the same polarity in adjacent rows are connected together with a single second elongate connection plate.

Each of the electrode assemblies may comprise a positive electrode tab and a negative electrode tab, the pluralities of positive and negative electrode tabs being arranged in parallel lines, each line only comprising electrodes of the same polarity.

The electrode tabs may have a rectangular cross section, wherein the long sides of electrode tabs in adjacent lines face each other.

In the secondary battery according to the embodiments, swelling of the prismatic can may be prevented by forming a plurality of cylindrical electrode assemblies wound in a jelly-roll configuration and housed in the prismatic can.

Embodiments of the invention will now be described by way of example with reference to the accompanying drawings, in which:
FIG. 1 is an enlarged perspective view illustrating a portion of a secondary battery according to an embodiment of the present invention;
FIG. 2 is a sectional view of a secondary battery according to an embodiment of the present invention;
FIG. 3 is a vertical section view illustrating a portion corresponding to FIG. 2 in a secondary battery according to another embodiment of the present invention;
FIG. 4 is a vertical section view illustrating a portion corresponding to FIG. 2 in a secondary battery according to still another embodiment of the present invention;
FIGS. 5A and 5B are sectional views illustrating coupled states of the secondary battery shown in FIG. 1;
FIG. 6A is a front view illustrating a plurality of electrode assemblies inserted into a can of a secondary battery according to yet still another embodiment of the present invention; and
FIG. 6B is a front view illustrating a plurality of electrode assemblies inserted into a can of a secondary battery according to still further embodiment of the present invention.

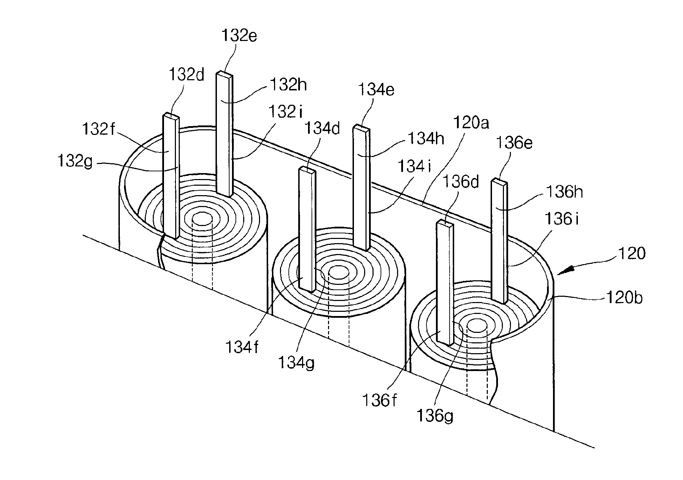

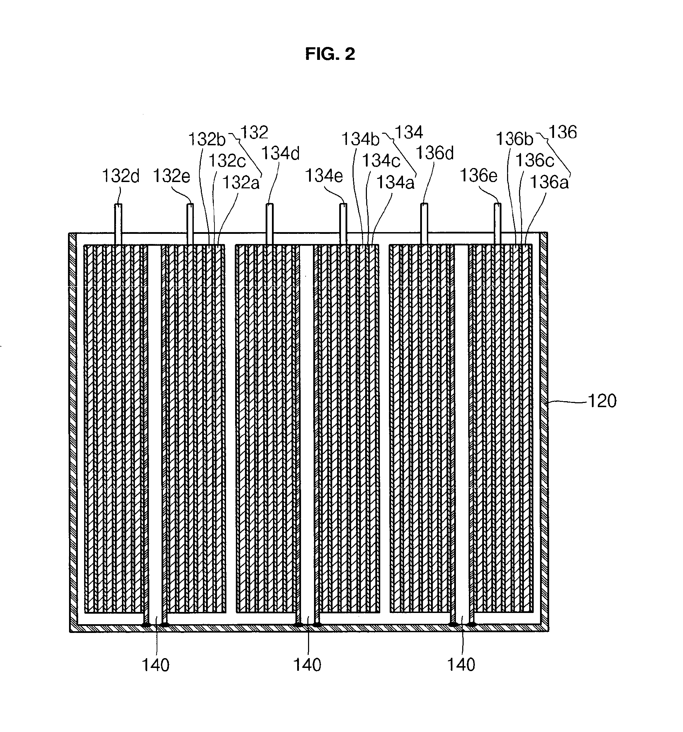

Referring to FIG. 1 and FIG. 2, the secondary battery 100 according to the illustrated embodiment includes a can 120, a plurality of electrode assemblies 130, centre pins 140, and a cap assembly 150.

In the secondary battery 100, the plurality of cylindrical electrode assemblies 130 are inserted into the prismatic can 120 through an upper open portion formed in the prismatic can 120. The centre pins 140 are inserted into centres of the cylindrical electrode assemblies 130, and fixed, for example welded, to the bottom of the can 120. The can 120 is sealed by the cap assembly 150.

The can 120 includes an opening 122. The can 120 has a substantially cuboid shape, and side edges thereof may be rounded. In addition, the can 120 may be made of a lightweight, conductive metal such as aluminum or an aluminum alloy, but aspects of the present invention are not limited thereto. In addition, the can 120 functions as an electrode terminal and may be a positive electrode. Preferably, the can 120 is formed by deep drawing, but the present invention is not limited thereto.

In addition, an electrolytic solution (not shown) is injected into the can 120, allowing lithium ions to move between positive and negative electrode plates, the lithium ions generated by an electrochemical reaction carried out in the battery during charge/discharge operations. The electrolytic solution (not shown) may be a non-aqueous organic electrolytic solution prepared by mixing a lithium salt and a high-purity organic solvent. In addition, the electrolytic solution (not shown) may be a polymer using a polymeric electrolyte, but not limited thereto.

The opening 122 is formed on a top portion of the can 120, and the electrode assemblies 130 are inserted into the can 120 through the opening 122. The opening 122 is sealed by the cap assembly 150.

The electrode assemblies 130 may include two or more unit electrode assemblies 130. In an exemplary embodiment, the electrode assemblies 130 include a first electrode assembly 132, a second electrode assembly 134, and third electrode assembly 136. The first electrode assembly 132, the second electrode assembly 134, and the third electrode assembly 136 are inserted into a single prismatic can 120 while being spaced apart from each other at minimum intervals.

While three of the electrode assemblies 130 are illustrated herein, the present invention is not limited thereto and multiple electrode assemblies may be provided.

The first electrode assembly 132 includes a first positive electrode tab 132d and a first negative electrode tab 132e electrically connected to a first positive electrode plate 132a and a first negative electrode plate 132b, respectively. The second electrode assembly 134 includes a second positive electrode tab 134d and a second negative electrode tab 134e electrically connected to a second positive electrode plate 134a and a second negative electrode plate 134b, respectively. In addition, the third electrode assembly 136 includes a third positive electrode tab 136d and a third negative electrode tab 136e electrically connected to a third positive electrode plate 136a and a third negative electrode plate 136b, respectively. Here, the first positive electrode tab 132d, the second positive electrode tab 134d and the third positive electrode tab 136d are electrically connected. In addition, the first negative electrode tab 132e, the second negative electrode tab 134e and the third negative electrode tab 136e are also electrically connected. The first positive electrode tab 132d, the second positive electrode tab 134d and the third positive electrode tab 136d, and the first negative electrode tab 132e, the second negative electrode tab 134e and the third negative electrode tab 136e are all formed to face the opening 122 of the can 120.

In addition, the first electrode assembly 132, the second electrode assembly 134 and the third electrode assembly 136 are, for example, electrically connected in parallel.

Since the first electrode assembly 132, the second electrode assembly 134 and the third electrode assembly 136 have substantially the same configurations, the following description will focus on the first electrode assembly 132.

The first electrode assembly 132 includes a first positive electrode plate 132a, a first negative electrode plate 132b, and a first separator 132c. The first electrode assembly 132 is fabricated by stacking the first positive electrode plate 132a and the first negative electrode plate 132b with the first separator 132c interposed therebetween, and the resulting structure is wound into a jelly roll configuration. The first positive electrode plate 132a includes a positive electrode collector formed of a highly conductive metal foil, for example, aluminum (Al) foil, and a positive electrode active material coated on a surface of the positive electrode collector. A portion of the positive electrode collector, where the positive electrode active material is not coated, that is, a positive electrode uncoated portion, is formed at both ends of the first positive electrode plate 132a, and the first positive electrode tab 132d made of Al is welded to one side of the positive electrode uncoated portion.

The first negative electrode plate 132b includes a negative electrode collector formed of a conductive metal foil, for example, copper (Cu) foil, and a negative electrode active material coated on a surface of the negative electrode collector. A portion of the negative electrode collector, where the negative electrode active material is not coated, that is, a negative electrode uncoated portion, is formed at both ends of the first negative electrode plate 132b, and the first negative electrode tab 132e made of nickel (Ni) is welded to one side of the negative electrode uncoated portion.

The first separator 132c is positioned between the first positive electrode plate 132a and the first negative electrode plate 132b. The separator 132c may be formed of a porous film made of polyethylene (PE), polypropylene (PP), or a combination thereof, but aspects of the present invention are not limited thereto.

The first separator 132c prevents electronic conduction in the first electrode assembly 132 with the first positive electrode plate 132a and the first negative electrode plate 132b and permits lithium ions to pass therebetween.

The first separator 132c prevents the first positive electrode plate 132a and the first negative electrode plate 132b from contacting each other, and prevents the temperature of the secondary battery 100 from increasing by shutting down the flow of current when the temperature of the secondary battery 100 rises due to an external short. In order to prevent a short between the first positive electrode plate 132a and the first negative electrode plate 132b, a ceramic layer prepared by mixing a ceramic material with a binder may further be provided in addition to the first separator 132c.

In addition, the first separator 132c is preferably wider than the first positive electrode plate 132a and the first negative electrode plate 132b in preventing a short between electrode plates.

Each of the centre pins 140 is shaped of a hollow cylinder. In addition, a length of the centre pin 140 is preferably approximately 90 to approximately 110% of a total length of the first electrode assembly 132. If the length of the centre pin 140 is less than or equal to 90% of the total length of the first electrode assembly 132, the first electrode assembly 132 is fixed or supported in a weak state. Meanwhile, if the length of the centre pin 140 is greater than or equal to 110% of the total length of the first electrode assembly 132, the centre pin 140 may contact components of the cap assembly 150, which is not desirable.

The centre pins 140 may be made of a metal. The centre pins 140 are inserted into a space formed in the centre of the first electrode assembly 132. The centre pins 140 arc welded to the bottom of the can 120. The centre pins 140 support the first electrode assembly 132, and suppress deformation and movement of the first electrode assembly 132 due to charge/discharge operations. In addition, since the centre pins 140 are formed in the first electrode assembly 132, the second electrode assembly 134 and the third electrode assembly 136, respectively, they can prevent each electrode assembly from moving due to a volumetric change.

The cap assembly 150 includes a cap plate 151, a gasket 152, an electrode terminal 153, an insulation plate 154, a terminal plate 155, an insulation case 156, and a plug 157.

The cap assembly 150 is sized and shaped corresponding to the opening 122 of the can 120, and is installed in the opening 122 of the can 120 to be sealed.

The cap plate 151 is a planar metal member sized and shaped corresponding to an entrance of the can 120. The cap plate 151 is coupled to the can 120 by, for example, welding, and functions as the same electrode as the can 120, that is, a positive electrode. In order to facilitate welding, the can 120 and the cap plate 151 are made of the same electrically conductive metal, such as aluminum or an aluminum alloy. An electrolyte injection hole 151 a through which an electrolytic solution is injected may be formed at one side of the cap plate 151.

The first positive electrode tab 132d, the second positive electrode tab 134d, and the third positive electrode tab 136d are welded to the bottom surface of the cap plate 151 to then be electrically connected, so that the outside of the secondary battery 100, excluding the electrode terminal 153, functions as a positive electrode terminal. Here, the positive electrode tabs 132d, 134d, and 136d may penetrate through holes 156a formed in the insulation case 156, respectively, which will later be described, and then be adhered to a bottom surface of the cap plate 151 after being bent if necessary. Alternatively, the first positive electrode tab 132d, the second positive electrode tab 134d, and the third positive electrode tab 136d may also be directly electrically connected to an inner surface of the can 120.

The gasket 152 is tubular and is positioned on an outer surface of the electrode terminal 153. The gasket 152 may insulate the electrode terminal 153 from the cap plate 151.

The electrode terminal 153 is positioned at the cap assembly 150, and extends through the cap plate 151 while surrounding the outer circumference surface of the gasket 152. The first negative electrode plate 132b, the second negative electrode tab 134b, and the third negative electrode tab 136b are electrically connected to the electrode terminal 153, functioning as a negative electrode terminal.

The insulation plate 154 is plate-shaped and is positioned on the bottom surface of the cap plate 151. The insulation plate 154 is made of the same insulating material as the gasket 152. Therefore, the cap plate 151 and the terminal plate 155 to be described later are insulated from each other by the insulation plate 154.

The terminal plate 155 is made of a metal and is positioned on the bottom surface of the insulation plate 154. The electrode terminal 153 is riveted by the terminal plate 155, so that it may not be dislodged from the cap plate 151.

The first negative electrode tab 132e, the second negative electrode tab 134e, and the third negative electrode tab 136e are directly welded to the terminal plate 155, and the terminal plate 155 is installed to be electrically conducted to the electrode terminal 153, thereby allowing the electrode terminal 153 to function as a negative electrode terminal. Here, the negative electrode tabs 132e, 134e, and 136e may penetrate the through holes 156a formed in the insulation case 156, respectively, which will later be described, and then be adhered to the bottom surface of the cap plate 151 after being bent if necessary.

Meanwhile, the terminal plate 155 may not be provided, and accordingly, the first negative electrode tab 132e, the second negative electrode tab 134e, and the third negative electrode tab 136e may be directly connected to the electrode terminal 153. The insulation case 156 is installed between the electrode assembly 130, specifically the electrode assemblies 132, 134 and 136, and the cap assembly 150 to prevent the electrode assemblies 132, 134 and 136 from moving up and down. In addition, the insulation case 156 is installed to prevent the electrode assemblies 132, 134 and 136 from being directly shorted to the cap assembly 150. In addition, the insulation case 156 includes a plurality of through holes 156a and 156b to allow the positive electrode tabs 132d, 134d, and 136d and the negative electrode tabs 132e, 134e, and 136e to pass therethrough upwardly. Further, the electrolytic solution injected through the electrolyte injection hole 151a is provided to the lower electrode assemblies 132, 134 and 136 via the through holes 156a and 156b of the insulation case 156. The insulation case 156 is made of a polymeric resin having an insulating property, for example, polypropylene.

The plug 157 is provided to seal the electrolyte injection hole 151a after the electrolytic solution is injected into the can 120 through the electrolyte injection hole 151a. The plug 157 is generally made of aluminum or an aluminum containing metal. The plug 157 is mechanically pressed into the electrolyte injection hole 151a and is then engaged with the electrolyte injection hole 151a.

Referring to FIG. 1, main surfaces 132f, 134f and 136f of the plurality of positive electrode tabs 132d, 134d and 136d are formed to face main surfaces 132h, 134h and 136h of the plurality of negative electrode tabs 132e, 134e and 136e. The main surfaces 132f, 134f and 136f of the plurality of positive electrode tabs 132d, 134d and 136d and the main surfaces 132h, 134h and 136h of the plurality of negative electrode tabs 132e, 134e and 136e face a main surface 120a of the can 120. Narrow surfaces 132g, 134g and 136g of the plurality of positive electrode tabs 132d, 134d and 136d and narrow surfaces 132i, 134i and 136i of the plurality of negative electrode tabs 132e, 134e and 136e face a round surface 120b of the can 120.

In other words, the tabs are substantially rectangular in cross-section and the long sides (main surfaces) of tabs of opposite polarity face one another, while the short sides (narrow surfaces) of tabs of the same polarity also face one another.

The plurality of positive electrode tabs 132d, 134d and 136d are aligned along a line. That is to say, the plurality of negative electrode tabs 132e, 134e and 136e are not positioned along the line formed by the plurality of positive electrode tabs 132d, 134d and 136d. In other words, all of the electrode tabs in a line have the same polarity.

The plurality of negative electrode tabs 132e, 134e and 136e are positioned on a line different from the line along which the plurality of positive electrode tabs 132d, 134d and 136d. That is to say, the plurality of positive electrode tabs 132d, 134d and 136d are not positioned along the line formed by the plurality of negative electrode tabs 132e, 134e and 136e.

A secondary battery 200 according to another embodiment of the present invention will now be described.

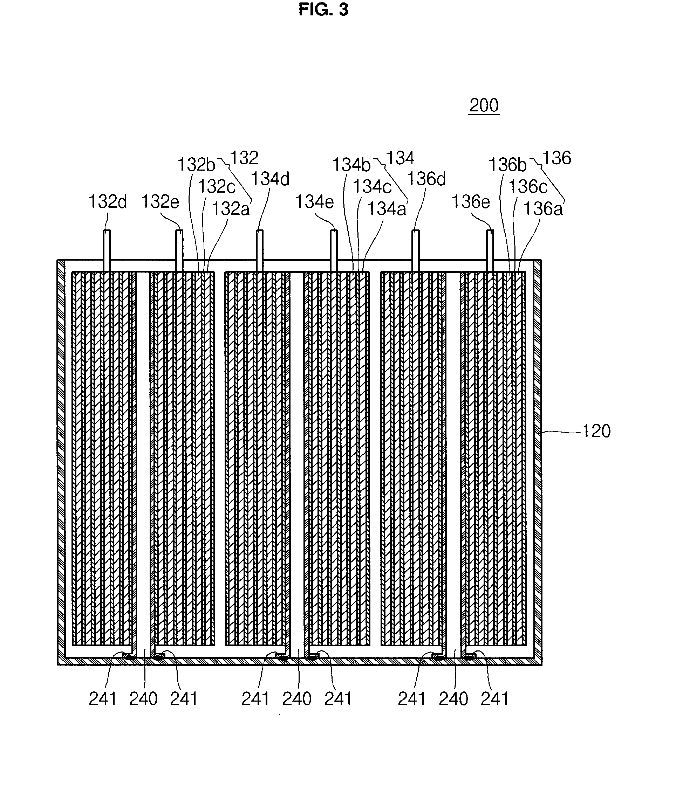

FIG. 3 is a vertical section view illustrating a portion corresponding to FIG. 2 in a secondary battery according to another embodiment of the present invention.
The secondary battery 200 according to the illustrated embodiment of the present invention includes a can 120, electrode assemblies 130, centre pins 240, and a cap assembly 150.

The secondary battery 200 is substantially the same as the secondary battery 100 shown in FIGS. 1 and 2, except for the configurations of the centre pins 240. Thus, the following description will focus on the centre pins 240. In addition, since the can 120, the electrode assemblies 130 and the cap assembly 150 of the secondary battery 200 according to the illustrated embodiment of the present invention are formed in the same manner as corresponding ones of the previous embodiment shown in FIGS. 1 and 2, they are identified by the same reference numerals, and detailed descriptions thereof will be omitted.

Referring to FIG. 3, each of the centre pins 240 includes a flange 241 formed on its bottom surface. The flange 241 is formed such that the bottom of the centre pin 240 is bent and faces outwardly.

The centre pin 240 may be made of a metal. The flange 241 of the centre pin 240 is welded to the bottom of the can 120. Since the flange 241 contacts the bottom of the can 120 with an increasing contact area, the centre pin 240 can be more effectively supported, thereby improving coupling reliability.

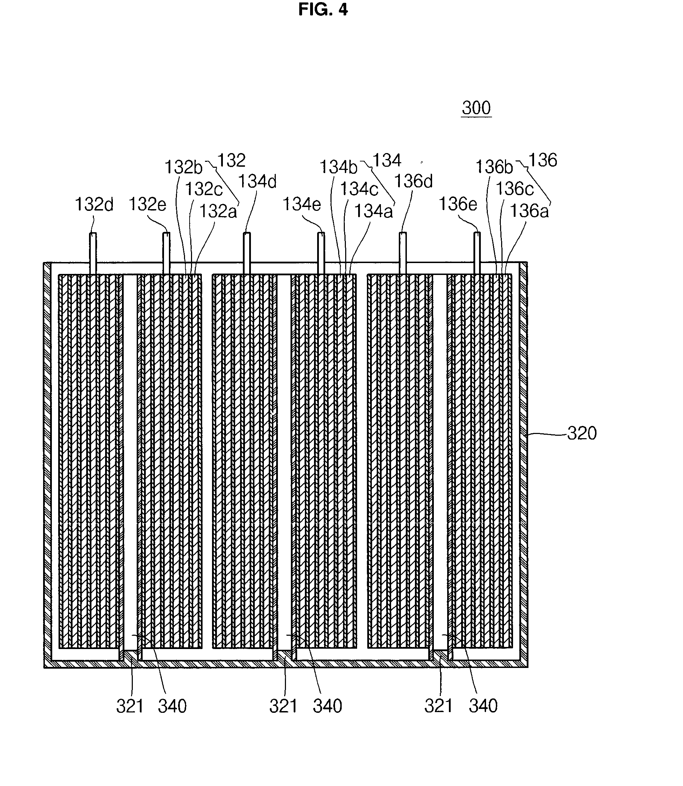

A secondary battery according to still another embodiment of the present invention will now be described. FIG. 4 is a vertical section view illustrating a portion corresponding to FIG. 2 in a secondary battery according to still another embodiment of the present invention.

The secondary battery 300 according to the illustrated embodiment includes a can 320, electrode assemblies 130, a centre pin 340, and a cap assembly 150.
The secondary battery 300 is substantially the same as the secondary battery 100 shown in FIGS. 1 and 2, except for configurations of the can 320 and the centre pin 340. Thus, the following description will focus on the can 320 and the centre pin 340. In addition, since the electrode assemblies 130 and the cap assembly 150 of the secondary battery 300 according to the illustrated embodiment of the present invention are formed in the same manner as corresponding ones of the previous embodiment shown in FIGS. 1 and 2, they are identified by the same reference numerals, and detailed descriptions thereof will be omitted.

Referring to FIG. 4, the can 320 has protruding parts 321 formed at its bottom surface. The protruding parts 321 have a size and height enough for a bottom portion of the centre pin 340 to be engaged with and fixed. In addition, the number of the protruding parts 321 corresponds to that of the centre pins 340. Since the centre pin 340 is directly engaged with each of the protruding parts 321, it can reduce a welding process for fixedly welding the can 320 and the centre pin 340 to each other.

The centre pin 340 is shaped of a cylinder and made of a metallic or plastic material.

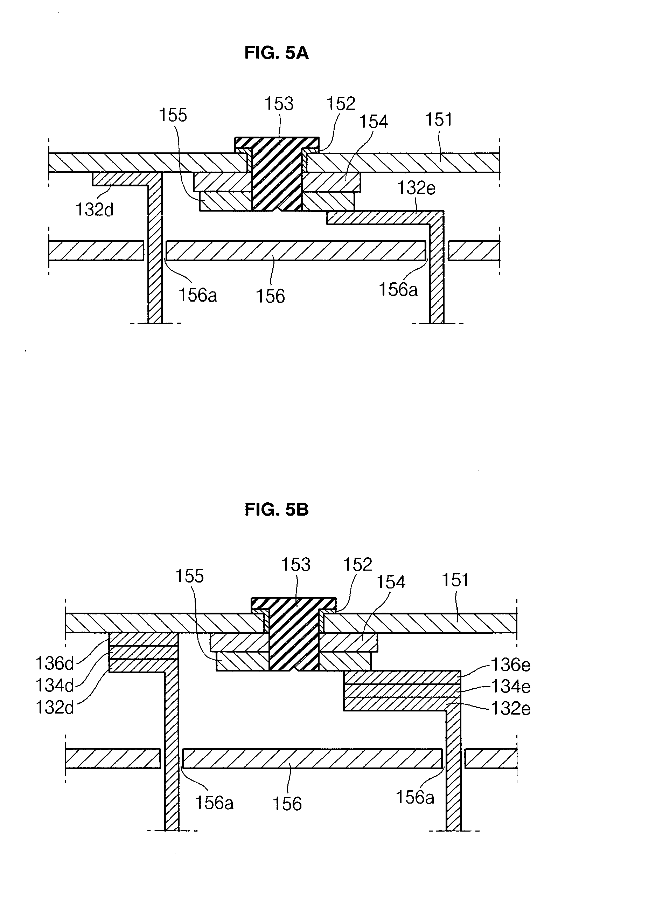

FIG. 5A is a sectional view illustrating a coupled state of the secondary battery shown in FIG. 1.

The plurality of positive electrode tabs 132d, 134d and 136d are connected to the cap plate 151, respectively. The plurality of positive electrode tabs 132d, 134d and 136d may penetrate the through holes 156a formed in the insulation case 156 to then be bent, respectively, and may be coupled to the bottom surface of the cap plate 151.

The plurality of negative electrode tabs 132e, 134e and 136e may penetrate the through holes 156b formed in the insulation case 156 to then be bent, respectively, and may be coupled to the bottom surface of the terminal plate 155.

FIG. 5B is a sectional view illustrating another example of a coupled state of the secondary battery shown in FIG. 1.

The plurality of positive electrode tabs 132d, 134d and 136d are stacked one on top of another to then be coupled to the cap plate 151. The plurality of positive electrode tabs 132d, 134d and 136d may penetrate the through holes 156a formed in the insulation case 156 to then be bent, respectively, and may be coupled to the bottom surface of the cap plate 151 in a state where they are stacked one on top of another.

The plurality of negative electrode tabs 132e, 134e and 136e may penetrate through holes 156b formed in the insulation case 156 to then be bent, respectively, and may be coupled to the bottom surface of the terminal plate 155 in a state where they are stacked one on top of another.

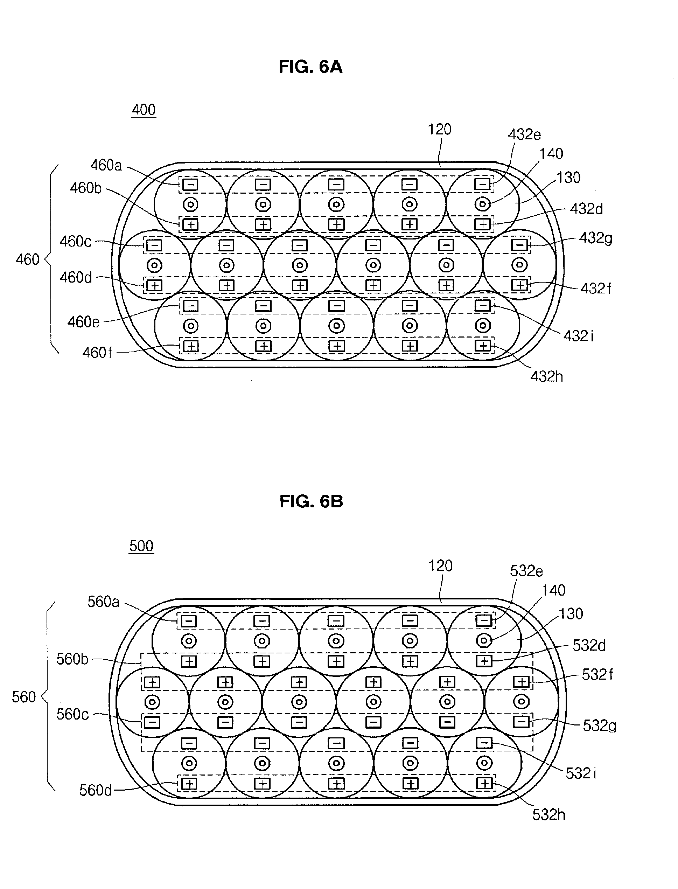

FIG. 6A is a front view illustrating a plurality of electrode assemblies inserted into a can of a secondary battery according to yet still another embodiment of the present invention.

The secondary battery 400 according to the illustrated embodiment of the present invention includes a can 120, electrode assemblies 130, centre pins 140, a connection arrangement 460, an insulation case (not shown), and a cap plate (not shown).

In the illustrated secondary battery 400, the electrode assemblies 130 are arranged in a different manner from those shown in FIGS. 1 through 2, and a plurality of connection plates 460a to 460f are provided to form a connection arrangement 460. Thus, the following description of the illustrated embodiment of the present invention will focus on the arranged state of the electrode assemblies 130 and the connection arrangement 460. In addition, since the can 120, the electrode assemblies 130, the centre pins 140, the insulation case (not shown) and the cap plate (not shown) of the illustrated secondary battery 400 are substantially the same as those of the previous embodiment shown in FIGS. 1 through 2, the same and corresponding functional components are denoted by the same reference numerals and detailed descriptions thereof will not be given.

At least three lines of the plurality of electrode assemblies 130 are aligned in a row, respectively. The illustrated embodiment of the present invention does not limit the number of lines of the electrode assemblies 130 to that illustrated herein.

The plurality of electrode assemblies 130 are aligned such that a plurality of negative electrode tabs 432e, 432g and 432i are aligned above the respective centre pins 140 while a plurality of positive electrode tabs 432d, 434f and 436h are aligned below the respective centre pins 140. Therefore, the positive electrode tabs 432d of the electrode assemblies 130 positioned on the first line and the negative electrode tabs 432g of the electrode assemblies 130 positioned on the second line are arranged to be adjacent to one another.

The connection arrangement 460 includes negative electrode connection plates, or tabs, 460a, 460c and 460e and positive electrode connection plates, or tabs, 460b, 460d and 460f. The connection tabs may be substantially rectangular plates. The connection arrangement 460 is positioned on the insulation case (not shown).

Specifically, the positive electrode connection tabs 460b, 460d and 460f are connected to the positive electrode tabs 432d, 432f and 432h, and the negative electrode connection tabs 460a, 460c and 460e are connected to the negative electrode tabs 432e, 432g and 432i. The positive electrode connection tabs 460b, 460d and 460f and the positive electrode tabs 432d, 432f and 432h are connected to each other to then be connected to the cap plate (not shown). The negative electrode connection tabs 460a, 460c and 460e and the negative electrode tabs 432e, 432g and 432i are connected to each other to then be connected to the terminal plate (not shown).

The number of the connection tabs formed is six (6) in total. That is to say, there are three negative electrode connection tabs 460a, 460c and 460e and three positive electrode connection tabs 460b, 460d and 460f. However, the illustrated embodiment of the present invention does not limit the number of the connection tabs in the connection arrangement 460 to that illustrated herein.

A secondary battery according to still further embodiment of the present invention will now be described.

FIG. 6B is a front view illustrating a plurality of electrode assemblies inserted into a can of a secondary battery according to still further embodiment of the present invention.

The secondary battery 500 according to the illustrated embodiment of the present invention includes a can 120, electrode assemblies 130, centre pins 140, a connection arrangement 560, an insulation case (not shown), and a cap plate (not shown).

In the illustrated secondary battery 500, the electrode assemblies 130 are arranged in a different manner from those shown in FIGS. 1 through 2, and the connection arrangement 560 is additionally provided. Thus, the following description of the illustrated embodiment of the present invention will focus on the arranged state of the electrode assemblies 130 and the connection arrangement 560. In addition, since the can 120, the electrode assemblies 130, the centre pins 140, the insulation case (not shown) and the cap plate (not shown) of the illustrated secondary battery 500 are substantially the same as those of the previous embodiment shown in FIGS. 1A through 2, the same and corresponding functional components are denoted by the same reference numerals and detailed descriptions thereof will not be given.

At least three lines of the plurality of electrode assemblies 130 are aligned in a row, respectively. The illustrated embodiment of the present invention does not limit the number of lines of the electrode assemblies 130 to that illustrated herein.

The plurality of electrode assemblies 130 are aligned such that positive electrode tabs 532d in the first line are arranged to be adjacent to positive electrode tabs 532f in the second line and negative electrode tabs 532g of the second line are arranged to be adjacent to negative electrode tabs 532i of the third line.

The first line of assemblies also includes a single line of negative electrode tabs 532e while the third line of assemblies also includes a single line of positive electrode tabs 532h.

The connection arrangement 560 includes positive electrode connection plates, or tabs, 560b and 560d and negative electrode connection plates, or tabs, 560a and 560c. The connection tabs may comprise substantially rectangular plates.

Specifically, a double width positive electrode connection tab 560b is connected to the positive electrode tabs 532d, 532f across adjacent lines of electrode assemblies, and a double width negative electrode connection tab 560c is connected to the negative electrode tabs 532g and 532i across adjacent lines of electrode assemblies. A single connection tab 560b, 560c can therefore connect electrode tabs in adjacent rows of electrode assemblies.

The negative electrode tabs 532e in the first row of electrode assemblies are connected together by a single width connection tab 560a similar to that disclosed in relation to Figure 6A above. Similarly, the positive electrode tabs 532h in the third row of electrode assemblies are connected together by a single width connection tab 560d.

The positive electrode connection tabs 560b and 560d and the positive electrode tabs 532d, 532f and 532h are connected to each other to then be connected to the cap plate (not shown). The negative electrode connection tabs 560a and 560c and the negative electrode tabs 532e, 532g and 532i are connected to each other to then be connected to the terminal plate (not shown).

The number of the connection tabs in the connection arrangement 560 is four (4) in total. That is to say, two connection tabs 560b, 560d are required to connect the positive electrode tabs and two connection tabs 560a, 560c are required to connect the negative electrode tabs. The illustrated embodiment of the present invention does not limit the number of the connection tabs to that illustrated herein. However, by aligning the plurality of electrode assemblies so that the closest electrode tabs in two adjacent rows have the same polarity, the same polarity tabs can be connected together by a single elongate connection plate, thereby reducing the number of the connection tabs in the connection arrangement 560. For each additional row of electrode assemblies, an additional double width connection plate is required.

While this invention has been particularly shown and described with reference to preferred embodiments thereof, it will be understood by those skilled in the art that various changes in form and details may be made therein without departing from the scope of the invention as defined in the claims.

## Claims

1. A secondary battery (100, 200, 300, 400, 500) comprising:
a can (120, 320);
a plurality of electrode assemblies (130, 132, 134, 136) in the can; and
a centre pin (140, 240, 340) in each of the electrode assemblies,
wherein each centre pin is attached to a bottom portion of the can.

2. The secondary battery of claim 1, wherein a bottom portion of each centre pin (240) comprises a flange (241) for connecting the centre pin to the bottom portion of the can.

3. The secondary battery of claim 1, wherein the bottom portion of the can comprises a plurality of projections (321) for receiving respective ones of the centre pins (320).

4. The secondary battery of any one of the preceding claims, wherein each centre pin comprises a hollow cylinder.

5. The secondary battery of any one of the preceding claims, wherein the length of each centre pin is between about 90% to about 110% of the length of one of the electrode assemblies.

6. The secondary battery of any one of the preceding claims, further comprising a cap plate (151) coupled to the can (120), wherein each of the electrode assemblies comprises first and second electrode tabs, wherein the first electrode tabs (132d, 134d, 136d) are connected to an underside of the cap plate or to an inside of the can, and the second electrode tabs (132e, 134e, 136e) are connected to a terminal plate 155 to form a battery terminal 153.

7. The secondary battery of claim 8, wherein the first electrode tabs (132d, 134d, 136d) are stacked together and connected to an underside of the cap plate, and the second electrode tabs (132e, 134e, 136e) are stacked together and connected to the terminal plate 155.

8. The secondary battery of any one of the preceding claims, wherein each of the electrode assemblies are cylindrical.

9. The secondary battery of claim 8, wherein the plurality of electrode assemblies are arranged in a single row.

10. The secondary battery of claim 8, wherein the plurality of electrode assemblies are arranged in multiple rows, wherein each electrode assembly comprises a positive electrode tab and a negative electrode tab.

11. The secondary battery of claim 10, wherein along each row of electrode assemblies, electrode tabs having the same polarity are aligned with one another and are connected together by a single first elongate connection plate (460a - 460f, 560a, 560d).

12. The secondary battery of claim 10 or 11, wherein the electrode assemblies in adjacent rows are arranged so that the closest electrode tabs in two adjacent rows have the same polarity, and the electrode tabs having the same polarity in adjacent rows are connected together with a single second elongate connection plate (560b, 560c).

13. The secondary battery of any one of the preceding claims, wherein each of the electrode assemblies comprises a positive electrode tab and a negative electrode tab, the pluralities of positive and negative electrode tabs being arranged in parallel lines, each line only comprising electrodes of the same polarity.

14. The secondary battery of claim 13, wherein the electrode tabs have a rectangular cross section, wherein the long sides of electrode tabs in adjacent lines face each other.

## Patentansprüche

1. Sekundärbatterie (100, 200, 300, 400, 500), umfassend:
eine Dose (120, 320);
eine Mehrzahl von Elektrodenanordnungen (130, 132, 134, 136) in der Dose; und
einen Mittelstift (140, 240, 340) in jeder der Elektrodenanordnungen,
wobei jeder Mittelstift an einem Bodenabschnitt der Dose angebracht ist.

2. Sekundärbatterie nach Anspruch 1, wobei ein unterer Abschnitt jedes Mittelstifts (240) einen Flansch (241) zum Verbinden des Mittelstifts mit dem Bodenabschnitt der Dose umfasst.

3. Sekundärbatterie nach Anspruch 1, wobei der Bodenabschnitt der Dose eine Mehrzahl von Vorsprüngen (321) zur Aufnahme der jeweiligen Mittelstifte (320) umfasst.

4. Sekundärbatterie nach einem der vorangehenden Ansprüche, wobei jeder Mittelstift einen Hohlzylinder umfasst.

5. Sekundärbatterie nach einem der vorangehenden Ansprüche, wobei die Länge jedes Mittelstifts zwischen etwa 90 % bis etwa 110 % der Länge einer der Elektrodenanordnungen liegt.

6. Sekundärbatterie nach einem der vorangehenden Ansprüche, weiterhin umfassend eine an die Dose (120) gekoppelte Deckelplatte (151), wobei jede der Elektrodenanordnungen erste und zweite Elektrodenlaschen umfasst, wobei die ersten Elekrodenlaschen (132d, 134d, 136d) mit einer Unterseite der Deckelplatte oder mit einer Innenseite der Dose verbunden sind und die zweiten Elektrodenlaschen (132e, 134e, 136e) mit einer Anschlussplatte 155 zur Ausbildung eines Batterieanschlusses 153 verbunden sind.

7. Sekundärbatterie nach Anspruch 8, wobei die ersten Elektrodenlaschen (132d, 134d, 136d) übereinander gestapelt und mit einer Unterseite der Deckelplatte verbunden sind und die zweiten Elektrodenlaschen (132e, 134e, 136e) übereinander gestapelt und mit der Anschlussplatte 155 verbunden sind.

8. Sekundärbatterie nach einem der vorangehenden Ansprüche, wobei jede der Elektrodenanordnungen zylindrisch ist.

9. Sekundärbatterie nach Anspruch 8, wobei die Mehrzahl von Elektrodenanordnungen in einer einzelnen Reihe angeordnet sind.

10. Sekundärbatterie nach Anspruch 8, wobei die Mehrzahl von Elektrodenanordnungen in mehreren Reihen angeordnet sind, wobei jede Elektrodenanordnung eine positive Elektrodenlasche und eine negative Elektrodenlasche umfasst.

11. Sekundärbatterie nach Anspruch 10, wobei entlang jeder Reihe von Elektrodenanordnungen Elektrodenlaschen mit gleicher Polarität fluchtend ausgerichtet sind und miteinander durch eine einzelne erste längliche Verbindungsplatte (460a bis 460f, 560a, 560d) verbunden sind.

12. Sekundärbatterie nach Anspruch 10 oder 11, wobei die Elektrodenanordnungen in benachbarten Reihen so angeordnet sind, dass die nächsten Elektrodenlaschen in zwei benachbarten Reihen die gleiche Polarität haben und die Elektrodenlaschen mit gleicher Polarität in benachbarten Reihen miteinander mit einer einzelnen zweiten länglichen Verbindungsplatte (560b, 560c) verbunden sind.

13. Sekundärbatterie nach einem der vorangehenden Ansprüche, wobei jede der Elektrodenanordnungen eine positive Elektrodenlasche und eine negative Elektrodenlasche umfasst, wobei die Mehrzahl positiver und negativer Elektrodenlaschen in parallelen Linien angeordnet sind, wobei jede Linie nur Elektroden gleicher Polarität umfasst.

14. Sekundärbatterie nach Anspruch 13, wobei die Elektrodenlaschen einen rechteckigen Querschnitt aufweisen, wobei die langen Seiten von Elektrodenlaschen in benachbarten Linien einander zugewandt sind.

## Revendications

1. Batterie secondaire (100, 200, 300, 400, 500) comprenant :
un boîtier (120, 320) ;
une pluralité d'ensembles d'électrode (130, 132, 134, 136) dans le boîtier ; et
une broche centrale (140, 240, 340) dans chacun des ensembles d'électrode,
dans laquelle chaque broche centrale est fixée à une partie inférieure du boîtier.

2. Batterie secondaire selon la revendication 1, dans laquelle une partie inférieure de chaque broche centrale (240) comprend une bride (241) pour raccorder la broche centrale à la partie inférieure du boîtier.

3. Batterie secondaire selon la revendication 1, dans laquelle la partie inférieure du boîtier comprend une pluralité de saillies (321) pour recevoir des broches respectives des broches centrales (320).

4. Batterie secondaire selon l'une quelconque des revendications précédentes, dans laquelle chaque broche centrale comprend un cylindre creux.

5. Batterie secondaire selon l'une quelconque des revendications précédentes, dans laquelle la longueur de chaque broche centrale est comprise entre environ 90% et environ 110% de la longueur de l'un des ensembles d'électrode.

6. Batterie secondaire selon l'une quelconque des revendications précédentes, comprenant en outre une plaque formant capuchon (151) couplée au boîtier (120), dans laquelle chacun des ensembles d'électrode comprend des premières et secondes languettes d'électrode, dans laquelle les premières languettes d'électrode (132d, 134d, 136d) sont raccordées à une face inférieure de la plaque formant capuchon ou bien à un intérieur du boîtier, et les secondes languettes d'électrode (132e, 134e, 136e) sont raccordées à une plaque de borne (155) afin de former une borne de batterie (153).

7. Batterie secondaire selon la revendication 8, dans laquelle les premières languettes d'électrode (132d, 134d, 136d) sont empilées ensemble et raccordées à une face inférieure de la plaque formant capuchon, et les secondes languettes d'électrode (132e, 134e, 136e) sont empilées ensemble et raccordées à la plaque de borne (155).

8. Batterie secondaire selon l'une quelconque des revendications précédentes, dans laquelle chacun des ensembles d'électrode est cylindrique.

9. Batterie secondaire selon la revendication 8, dans laquelle la pluralité d'ensembles d'électrode sont agencés sur une seule rangée.

10. Batterie secondaire selon la revendication 8, dans laquelle la pluralité d'ensembles d'électrode sont agencés sur plusieurs rangées, dans laquelle chaque ensemble d'électrode comprend une languette d'électrode positive et une languette d'électrode négative.

11. Batterie secondaire selon la revendication 10, dans laquelle le long de chaque rangée d'ensembles d'électrode, des languettes d'électrode ayant la même polarité sont alignées entre elles et sont raccordées ensemble par une première plaque de raccordement allongée unique (460a-460f, 560a, 560d).

12. Batterie secondaire selon la revendication 10 ou 11, dans laquelle les ensembles d'électrode dans des rangées adjacentes sont agencés de sorte que les languettes d'électrode les plus proches dans deux rangées adjacentes ont la même polarité, et les languettes d'électrode ayant la même polarité dans des rangées adjacentes sont raccordées ensembles avec une seconde plaque de raccordement allongée unique (560b, 560c).

13. Batterie secondaire selon l'une quelconque des revendications précédentes, dans laquelle chacun des ensembles d'électrode comprend une languette d'électrode positive et une languette d'électrode négative, la pluralité de languettes d'électrode positive et négative étant agencées sur des lignes parallèles, chaque ligne comprenant uniquement les électrodes de la même polarité.

14. Batterie secondaire selon la revendication 13, dans laquelle les languettes d'électrode ont une section transversale rectangulaire, dans laquelle les côtés longs des languettes d'électrode dans des lignes adjacentes se font face.
